# EUROPÄISCHE PATENTSCHRIFT

(11) **EP 3 565 756 B1**
(45) Veröffentlichungstag und Bekanntmachung des Hinweises auf die Patenterteilung: **04.08.2021**
(21) Anmeldenummer: 17808931.4
(22) Anmeldetag: 05.12.2017
(51) Int. Cl.: B62D 15/02

(54) **STEUEREINHEIT UND VERFAHREN ZUR ERMITTLUNG EINER TRAJEKTORIE FÜR EIN RÜCKFAHRASSISTENZSYSTEM**
CONTROL UNIT AND METHOD FOR DETERMINING A TRAJECTORY FOR A REVERSING ASSISTANCE SYSTEM
DISPOSITIF ET PROCÉDÉ DE DÉTERMINATION D'UNE TRAJECTOIRE POUR UN SYSTÈME D'AIDE À LA MARCHE ARRIÈRE

(30) Priorität: 09.01.2017 DE 102017200219
(43) Veröffentlichungstag der Anmeldung: 13.11.2019
(73) Patentinhaber: Bayerische Motoren Werke Aktiengesellschaft, 80809 München (DE)
(72) Erfinder: STRÖBEL, Michael, 80997 München (DE)
(86) Internationale Anmeldenummer: PCT/EP2017/081544
(87) Internationale Veröffentlichungsnummer: WO 2018/127344

(56) Entgegenhaltungen:
- DE-A1-102010 030 208
- DE-A1-102010 049 585
- DE-A1-102014 220 144
- US-A1- 2015 203 111

## Beschreibung

Die Erfindung betrifft ein Verfahren und eine entsprechende Steuereinheit zur Ermittlung einer Trajektorie für ein Rückfahrassistenzfunktion eines mehrspurigen Kraftfahrzeugs.

Ein Fahrzeug, insbesondere ein Straßenkraftfahrzeug, kann ein oder mehrere Fahrerassistenzsysteme, FAS, umfassen, bei denen eine automatische Querführung des Fahrzeugs erfolgt. Beispielsweise kann sich bei einem sogenannten Rückfahrassistenzsystem das Fahrzeug eine Trajektorie merken, mit der das Fahrzeug in eine bestimmte Parklücke eingefahren ist. Das Rückfahrassistenzsystem kann dann einen Fahrer dabei unterstützen wieder entlang der gespeicherten Trajektorie aus der Parklücke herauszufahren. Die Lenkeingriffe erfolgen dabei autonom durch das Fahrzeug, während der Fahrer des Fahrzeugs typischerweise die Längsbewegung des Fahrzeugs steuert.

DE 10 2010 030208 A1 beschreibt ein beispielhaftes Rückfahrassistenzsystem, insbesondere eine Steuereinheit für ein Rückfahrassistenzsystem eines Fahrzeugs, wobei die Steuereinheit eingerichtet ist, Referenzdaten in Bezug auf eine erste Vorwärtsfahrt des Fahrzeugs zu ermitteln und zu speichern, die manuell durch einen Fahrer des Fahrzeugs bewirkt wird, wobei die Referenzdaten eine Referenz-Trajektorie des Fahrzeugs für die erste Vorwärtsfahrt von einer Anfangsposition bis zu einer ersten Endposition anzeigen.

US 2015/203111 A1 beschreibt einen Einparkassistenten, der es einem Nutzer ermöglicht, das Fahrzeug an einem Zwischenpunkt eines Einparkmanövers zu verlassen, insbesondere eine Steuereinheit für ein Fahrerassistenzsystem eines Fahrzeugs mit automatisierter Querführung und/oder automatisierter Längsführung, wobei die Steuereinheit eingerichtet ist,
- Daten in Bezug auf eine erste Fahrt des Fahrzeugs zu ermitteln und zu speichern, wobei die Daten eine Trajektorie des Fahrzeugs für die erste Fahrt von einer Anfangsposition bis zu einer ersten Endposition anzeigen;
- eine Zwischenposition zu bestimmen, die zwischen der Anfangsposition und der ersten Endposition auf der Trajektorie liegt, wobei die Daten in Bezug auf die erste Fahrt Daten umfassen, die die Trajektorie ausgehend von der Zwischenposition anzeigen.

DE 10 2014 220 144 A1 beschreibt einen Einparkassistenten, der in einer Lernphase eine Fahrtrajektorie erlernen kann. DE 10 2010 049585 A1 beschreibt einen Einparkassistenten, der den Fahrer über haptische Signale entlang einer Solltrajektorie leitet.

Das vorliegende Dokument befasst sich mit der technischen Aufgabe, den Komfort eines Rückfahrassistenzsystems zu erhöhen und den Anwendungsbereich eines Rückfahrassistenzsystems zu erweitern.

Die Aufgabe wird durch die unabhängigen Ansprüche gelöst. Vorteilhafte Ausführungsformen werden u.a. in den abhängigen Ansprüchen beschrieben.

Gemäß einem Aspekt wird eine Steuereinheit für ein Rückfahrassistenzsystem eines Fahrzeugs, insbesondere eines mehrspurigen Straßenkraftfahrzeugs, beschrieben. Die Steuereinheit ist eingerichtet, Referenzdaten in Bezug auf eine erste Vorwärtsfahrt des Fahrzeugs zu ermitteln und zu speichern. Dabei zeigen die Referenzdaten eine Referenz-Trajektorie des Fahrzeugs für die erste Vorwärtsfahrt von einer Anfangsposition bis zu einer ersten Endposition an. Die Referenzdaten können Positionsinformation (z.B. Koordinaten in einem Fahrzeug-Koordinatensystem) eines Referenzpunktes des Fahrzeugs auf der Referenz-Trajektorie umfassen. Des Weiteren können die Referenzdaten Orientierungsinformation in Bezug auf eine Orientierung des Fahrzeugs auf der Referenz-Trajektorie umfassen. Die Positionsinformation und die Orientierungsinformation kann ggf. durch Krümmungsinformation in Bezug auf eine Krümmung von unterschiedlichen Segmenten der Referenz-Trajektorie angezeigt werden. Der Referenzpunkt des Fahrzeugs kann z.B. der Mittelpunkt einer Hinterachse des Fahrzeugs sein. Die Referenzdaten können somit den Verlauf des Referenzpunktes auf der ersten Vorwärtsfahrt als Referenz-Trajektorie anzeigen.

Die Steuereinheit ist weiter eingerichtet, zu detektieren bzw. zu bestimmen, dass das Fahrzeug an einer Zwischenposition, die zwischen der Anfangsposition und der ersten Endposition (insbesondere auf der Referenz-Trajektorie) liegt, eine neue, zweite Vorwärtsfahrt beginnt. Beispielsweise kann detektiert werden, dass nach einer Rückwärtsfahrt an der Zwischenposition wieder ein Vorwärtsgang eingelegt wird, um die zweite Vorwärtsfahrt zu beginnen.

Insbesondere kann die Steuereinheit eingerichtet sein, zu ermitteln, dass das Fahrzeug bei einer Rückwärtsfahrt von der ersten Endposition an die Zwischenposition überführt wurde. Die Rückwärtsfahrt kann dabei manuell durch einen Fahrer des Fahrzeugs durchgeführt worden sein. Alternativ kann die Rückwärtsfahrt mit Unterstützung des Rückfahrassistenzsystems durchgeführt worden sein. Der Fahrer kann das Fahrzeug an einer bestimmten Position angehalten haben. Die Steuereinheit kann dann einen Abstand der bestimmten Position des Fahrzeugs von einer Position auf der Referenz-Trajektorie ermitteln. Es kann dann in Abhängigkeit von dem Abstand ermittelt werden, ob sich das Fahrzeug zu Beginn der zweiten Vorwärtsfahrt an einer Zwischenposition auf der Referenz-Trajektorie befindet. Beispielsweise kann bestimmt werden, dass das Fahrzeug die zweite Vorwärtsfahrt an einer Zwischenposition auf der Referenz-Trajektorie beginnt, wenn die zweite Vorwärtsfahrt an einer Position beginnt, die 30cm, 20cm oder weniger von der Referenz-Trajektorie entfernt ist.

Die Steuereinheit ist ferner eingerichtet, Referenzdaten in Bezug auf die zweite Vorwärtsfahrt des Fahrzeugs zu ermitteln, wobei die Referenzdaten die Referenz-Trajektorie des Fahrzeugs für die zweite Vorwärtsfahrt ausgehend von der Zwischenposition anzeigen. Die zweite Vorwärtsfahrt kann das Fahrzeug z.B. bis zu einem zweiten Endpunkt führen.

Außerdem ist die Steuereinheit eingerichtet, die Referenzdaten bezüglich der Referenz-Trajektorie für die zweite Vorwärtsfahrt ausgehend von der Zwischenposition in Verbindung mit den Referenzdaten bezüglich der Referenz-Trajektorie für die erste Vorwärtsfahrt von der Anfangsposition bis zu der Zwischenposition zu setzen und/oder in Zusammenhang miteinander zu speichern. Mit anderen Worten, die Referenzdaten für die zweite Vorwärtsfahrt ausgehend von der Zwischenposition können in Verbindung mit den Referenzdaten für die erste Vorwärtsfahrt bis zu der Zwischenposition gesetzt und/oder in Zusammenhang miteinander gespeichert werden. So kann auch für eine Aneinanderreihung von Vorwärtsfahrten eine durchgängige und/oder zusammenhängende Referenz-Trajektorie bereitgestellt werden, die von einem Rückfahrassistenzsystem dazu genutzt werden kann, das Fahrzeug zumindest teilweise autonom rückwärts zu führen. Somit können der Komfort eines Rückfahrassistenzsystem erhöht und der Anwendungsbereich eines Rückfahrassistenzsystems erweitert werden.

Die Steuereinheit kann eingerichtet sein, die Referenzdaten in einer Speichereinheit (insbesondere in einer Speichereinheit des Fahrzeugs) zu speichern. Die Speichereinheit kann einen Ringspeicher umfassen, auf dem die Referenzdaten für eine Nenndistanz der Referenz-Trajektorie gespeichert werden können (z.B. für 50 Meter).

Die Referenzdaten bezüglich der Referenz-Trajektorie für die erste Vorwärtsfahrt von der Zwischenposition bis zu der ersten Endposition können mit den Referenzdaten bezüglich der Referenz-Trajektorie für die zweite Vorwärtsfahrt ausgehend von der Zwischenposition überschrieben werden. So kann ein Rückfahrassistenzsystem in zuverlässiger und effizienter Weise in der Speichereinheit auf eine durchgängige Referenz-Trajektorie zugreifen.

Die Steuereinheit kann eingerichtet sein, Referenzdaten bezüglich der Anfangsposition mit Referenzdaten bezüglich einer aktuellen Position des Fahrzeugs zu überschreiben, wenn eine Distanz der gespeicherten Referenz-Trajektorie die Nenndistanz erreicht. So kann gewährleistet werden, dass die Referenz-Trajektorie immer die zuletzt erreichten Positionen des Fahrzeugs anzeigt.

Die Steuereinheit kann eingerichtet sein, eine Lenkvorrichtung des Fahrzeugs bei einer Rückwärtsfahrt des Fahrzeugs in Abhängigkeit von den Referenzdaten zu steuern, um das Fahrzeug nach Beendigung der zweiten Vorwärtsfahrt bis zu einer Rückfahrposition auf der Referenz-Trajektorie zwischen der Anfangsposition und der Zwischenposition zu führen. Insbesondere kann die Steuereinheit eingerichtet sein, auf Basis der Referenzdaten eine Rückfahr-Trajektorie zu der Rückfahrposition zu ermitteln. Die Lenkvorrichtung des Fahrzeugs kann dann bei der Rückwärtsfahrt des Fahrzeugs in Abhängigkeit von der Rückfahr-Trajektorie gesteuert werden. Die Querführung des Fahrzeugs bei der Rückwärtsfahrt kann somit autonom durch die Steuereinheit bzw. durch das Rückfahrassistenzsystem durchgeführt werden. Andererseits kann die Längsführung des Fahrzeugs weiter durch den Fahrer des Fahrzeugs durchgeführt werden.

Des Weiteren kann die Steuereinheit eingerichtet sein, auf Basis der Referenzdaten einen Abdeckungsbereich des Fahrzeugs bei der ersten und der zweiten Vorwärtsfahrt zu ermitteln. Der Abdeckungsbereich des Fahrzeugs zeigt dabei Bereiche entlang der Referenz-Trajektorie an, die von dem Fahrzeug abgedeckt wurden. Die Rückfahr-Trajektorie kann dann auch in Abhängigkeit von dem Abdeckungsbereich des Fahrzeugs ermittelt werden. Insbesondere kann die Rückfahr-Trajektorie derart ermittelt werden, dass das Fahrzeug bei der Rückwärtsfahrt weitestgehend (z.B. zu 90% oder mehr) innerhalb des Abdeckungsbereichs bleibt. So kann eine sichere Rückwärtsfahrt ermöglicht werden.

Gemäß einem weiteren Aspekt wird ein Verfahren zur Ermittlung einer Referenz-Trajektorie für ein Rückfahrassistenzsystem eines Fahrzeugs beschrieben. Das Verfahren umfasst das Ermitteln und Speichern von Referenzdaten in Bezug auf eine erste Vorwärtsfahrt des Fahrzeugs, wobei die Referenzdaten die Referenz-Trajektorie des Fahrzeugs für die erste Vorwärtsfahrt von einer Anfangsposition zu einer ersten Endposition anzeigen.

Das Verfahren umfasst weiter das Detektieren bzw. das Bestimmen, dass das Fahrzeug an einer Zwischenposition, die zwischen der Anfangsposition und der ersten Endposition auf der Referenz-Trajektorie liegt, eine neue, zweite Vorwärtsfahrt beginnt. Außerdem umfasst das Verfahren das Ermitteln von Referenzdaten in Bezug auf die zweite Vorwärtsfahrt des Fahrzeugs, wobei die Referenzdaten die Referenz-Trajektorie des Fahrzeugs für die zweite Vorwärtsfahrt ausgehend von der Zwischenposition anzeigen. Das Verfahren umfasst ferner das Verbinden und/oder das Speichern der Referenzdaten bezüglich der Referenz-Trajektorie für die zweite Vorwärtsfahrt ausgehend von der Zwischenposition in Zusammenhang mit den Referenzdaten bezüglich der Referenz-Trajektorie für die erste Vorwärtsfahrt von der Anfangsposition bis zu der Zwischenposition. So kann eine zusammenhängende Referenz-Trajektorie bereitgestellt werden.

Die oben beschriebenen Aspekte wurden in Zusammenhang mit einem Rückfahrassistenzsystem beschrieben. Es sei jedoch darauf hingewiesen, dass die beschriebenen Aspekte in entsprechender Weise auf Fahrerassistenzsysteme angewendet werden können, die eine automatisierte Quer- und/oder Längsführung eines Fahrzeugs umfassen. Insbesondere sind die beschriebenen Aspekte auf Fahrerassistenzsysteme zum Rangieren eines Fahrzeugs anwendbar. Dabei kann, insbesondere in den Ansprüchen, der Begriff "Rückfahrassistenzsystem" durch den Begriff "Fahrerassistenzsystem", der Begriff "Vorwärtsfahrt" durch den Begriff "Referenzfahrt", der Begriff "Rückwärtsfahrt" durch den Begriff "erneute Fahrt" und/oder der Begriff "Rückfahr-Trajektorie" durch den Begriff "FahrTrajektorie" ersetzt werden.

Es wird somit eine Steuereinheit für ein Fahrerassistenzsystem eines Fahrzeugs mit automatisierter Querführung und/oder automatisierter Längsführung beschrieben. Die Steuereinheit ist eingerichtet, Referenzdaten in Bezug auf eine erste Referenzfahrt des Fahrzeugs zu ermitteln und zu speichern. Dabei zeigen die Referenzdaten eine Referenz-Trajektorie des Fahrzeugs für die erste Referenzfahrt von einer Anfangsposition bis zu einer ersten Endposition an. Außerdem ist die Steuereinheit eingerichtet, zu detektieren, dass das Fahrzeug an einer Zwischenposition, die zwischen der Anfangsposition und der ersten Endposition auf der Referenz-Trajektorie liegt, eine neue, zweite Referenzfahrt beginnt. Dabei weisen die erste und die zweite Referenzfahrt bevorzugt die gleiche Fahrtrichtung auf.

Die Steuereinheit ist weiter eingerichtet, Referenzdaten in Bezug auf die zweite Referenzfahrt des Fahrzeugs zu ermitteln, wobei die Referenzdaten die Referenz-Trajektorie des Fahrzeugs für die zweite Referenzfahrt ausgehend von der Zwischenposition anzeigen. Außerdem ist die Steuereinheit eingerichtet, die Referenzdaten bezüglich der Referenz-Trajektorie für die zweite Referenzfahrt ausgehend von der Zwischenposition in Verbindung mit den Referenzdaten bezüglich der Referenz-Trajektorie für die erste Referenzfahrt von der Anfangsposition bis zu der Zwischenposition zu setzen, um eine zusammenhängende Referenz-Trajektorie für eine assistierte erneute Fahrt bereitzustellen.

Insbesondere kann auf Basis der zusammenhängenden Referenz-Trajektorie eine Fahr-Trajektorie für eine erneute Fahrt zwischen der Anfangsposition und der zweiten Endposition der zweiten Referenzfahrt ermittelt werden. Eine Lenkvorrichtung des Fahrzeugs kann dann in Abhängigkeit von der FahrTrajektorie angesteuert werden, um den Fahrer des Fahrzeugs bei der erneuten Fahrt zu unterstützen.

Somit kann auch für eine Aneinanderreihung von Referenzfahrten eine durchgängige und/oder zusammenhängende Referenz-Trajektorie bereitgestellt werden, die von einem Fahrerassistenzsystem dazu genutzt werden kann, das Fahrzeug bei einer erneuten Fahrt zumindest teilweise autonom zu führen. Somit können der Komfort eines Fahrerassistenzsystems erhöht und der Anwendungsbereich eines Fahrerassistenzsystems erweitert werden.

Gemäß einem weiteren Aspekt wird ein Verfahren zur Ermittlung einer Referenz-Trajektorie für ein Fahrerassistenzsystem eines Fahrzeugs mit automatisierter Querführung und/oder Längsführung beschrieben. Das Verfahren umfasst das Ermitteln und Speichern von Referenzdaten in Bezug auf eine erste Referenzfahrt des Fahrzeugs, wobei die Referenzdaten die Referenz-Trajektorie des Fahrzeugs für die erste Referenzfahrt von einer Anfangsposition zu einer ersten Endposition anzeigen. Außerdem umfasst das Verfahren das Detektieren, dass das Fahrzeug an einer Zwischenposition, die zwischen der Anfangsposition und der ersten Endposition auf der Referenz-Trajektorie liegt, eine neue, zweite Referenzfahrt beginnt. Das Verfahren umfasst ferner das Ermitteln von Referenzdaten in Bezug auf die zweite Referenzfahrt des Fahrzeugs, wobei die Referenzdaten die Referenz-Trajektorie des Fahrzeugs für die zweite Referenzfahrt ausgehend von der Zwischenposition anzeigen. Außerdem umfasst das Verfahren das Verbinden und/oder Speichern der Referenzdaten bezüglich der Referenz-Trajektorie für die zweite Referenzfahrt ausgehend von der Zwischenposition mit den Referenzdaten bezüglich der Referenz-Trajektorie für die erste Referenzfahrt von der Anfangsposition bis zu der Zwischenposition, um eine zusammenhängende Referenz-Trajektorie für eine assistierte erneute Fahrt bereitzustellen.

Die erste und die zweite Referenzfahrt können bevorzugt jeweils eine Vorwärtsfahrt (in Vorwärtsrichtung des Fahrzeugs) sein. Alternativ können die Referenzfahrten jeweils Rückwärtsfahrten (in Rückwärtsrichtung des Fahrzeugs) sein. Die erneute Fahrt kann eine Fahrt in Richtung zu der (zweiten) Endposition oder eine Fahrt in Richtung zu der Anfangsposition sein. Des Weiteren kann die erneute Fahrt eine Vorwärtsfahrt oder eine Rückwärtsfahrt sein. Bevorzugt ist die erneute Fahrt eine Rückwärtsfahrt in Richtung zu der Anfangsposition.

In einem weiteren bevorzugten Beispiel sind die Referenzfahrten und die erneute Fahrt jeweils eine Vorwärtsfahrt oder alternativ jeweils eine Rückwärtsfahrt. So kann einem Fahrzeug eine zusammengesetzte Referenz-Trajektorie für eine erneute Fahrt in der gleichen Fahrtrichtung erlernt werden.

Die Steuereinheit kann eingerichtet sein, bei der erneuten Fahrt auf Basis der Fahr-Trajektorie eine automatisierte Querführung und eine automatisierte Längsführung durchzuführen. Ggf. kann die Steuereinheit ein Steuersignal von einer Fernbedienung des Fahrzeugs empfangen und daraufhin die Längsführung des Fahrzeugs veranlassen. So kann ein Nutzer des Fahrzeugs die Längsführung des Fahrzeugs mittels einer Fernbedienung steuern.

Gemäß einem weiteren Aspekt wird ein mehrspuriges Fahrzeug (insbesondere ein Straßenkraftfahrzeug z.B. ein Personenkraftwagen oder ein Lastkraftwagen) beschrieben, das eine in diesem Dokument beschriebene Steuereinheit umfasst.

Gemäß einem weiteren Aspekt wird ein Software (SW) Programm beschrieben. Das SW Programm kann eingerichtet werden, um auf einem Prozessor (z.B. auf einem Steuergerät eines Fahrzeugs) ausgeführt zu werden, und um dadurch eines der in diesem Dokument beschriebenen Verfahren auszuführen.

Gemäß einem weiteren Aspekt wird ein Speichermedium beschrieben. Das Speichermedium kann ein SW Programm umfassen, welches eingerichtet ist, um auf einem Prozessor ausgeführt zu werden, und um dadurch eines der in diesem Dokument beschriebenen Verfahren auszuführen.

Im Weiteren wird die Erfindung anhand von Ausführungsbeispielen näher beschrieben. Dabei zeigen
Figur 1 ein beispielhaftes zweispuriges Fahrzeugs;
Figur 2 ein beispielhaftes Fahrmanöver;
Figur 3 die beispielhafte Anpassung einer Referenz-Trajektorie bei einem Fahrmanöver mit mehreren Zügen;
Figur 4 beispielhafte Speichereinträge bezüglich einer Referenz-Trajektorie; und
Figur 5 ein Ablaufdiagramm eines beispielhaften Verfahrens zur Ermittlung einer Referenz-Trajektorie für ein Rückfahrmanöver.

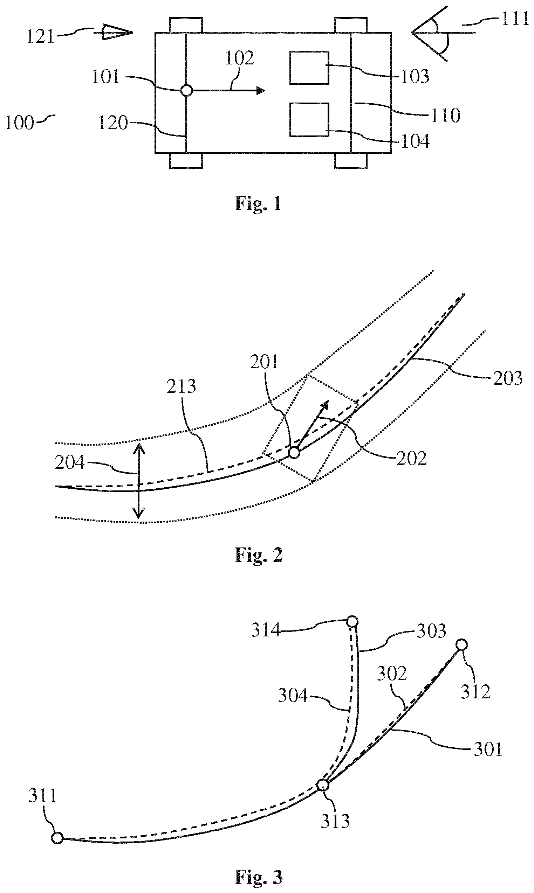

Wie eingangs dargelegt, befasst sich das vorliegende Dokument mit der Bereitstellung einer Referenz-Trajektorie für ein Rückfahrmanöver. In diesem Zusammenhang zeigt Fig. 1 ein Blockdiagramm eines beispielhaften mehrspurigen, insbesondere zweispurigen, Fahrzeugs 100. Das Fahrzeug 100 umfasst eine Vorderachse 110 und eine Hinterachse 120. Dabei kann über eine Lenkvorrichtung der Vorderachse 110 ein bestimmter vorderer Lenkwinkelbereich 111 umgesetzt werden. Ggf. kann das Fahrzeug 100 eine Hinterradlenkvorrichtung aufweisen, mit der ein bestimmter hinterer Lenkwinkelbereich 121 umgesetzt werden kann. Typischerweise ist der vordere Lenkwinkelbereich 111 substantiell größer als der hintere Lenkwinkelbereich 121.

Im Folgenden werden die in diesem Dokument beschriebenen Maßnahmen auf Basis eines Rückfahrassistenzsystems beschrieben, bei dem Referenzfahrten zur Aufzeichnung einer zusammenhängenden Referenz-Trajektorie in Vorwärtsrichtung erfolgt und bei dem eine erneute Fahrt entlang einer FahrTrajektorie in Rückwärtsrichtung entlang einer Rückfahr-Trajektorie erfolgt. Die beschriebenen Vorwärtsfahrten sind somit Beispiele für allgemeine Referenzfahrten und die beschriebene Rückfahr-Trajektorie ist ein Beispiel für eine allgemeine Fahr-Trajektorie. Insbesondere gelten die in diesem Dokument beschriebenen Aspekte
- in Bezug auf eine erste und eine zweite Vorwärtsfahrt allgemein für eine erste und eine zweite Referenzfahrt (die ggf. jeweils auch in Rückwärtsrichtung mit einem Fahrzeug 100 gefahren werden können);
- in Bezug auf eine Rückwärtsfahrt allgemein für eine erneute Fahrt (die ggf. auch in Vorwärtsrichtung mit einem Fahrzeug 100 gefahren werden kann); und/oder
- in Bezug auf eine Rückfahr-Trajektorie allgemein für eine FahrTrajektorie (die ggf. auch in der gleichen Richtung gefahren werden kann, wie die Referenz-Trajektorie bei der Referenzfahrt).

Ein Nutzer des Fahrzeugs 100 kann z.B. bei Einfahrt in ein Parkhaus ein Rückfahrassistenzsystem aktivieren. In Reaktion darauf wird von einer Steuereinheit 103 des Fahrzeugs 100 bei einer Vorwärtsfahrt eine Referenz-Trajektorie 203 (siehe Fig. 2) erfasst und in einer Speichereinheit 104 gespeichert. Alternativ oder ergänzend kann ggf. automatisch die Erfassung und Speicherung einer Referenz-Trajektorie 203 erfolgen, z.B. wenn die Fahrgeschwindigkeit des Fahrzeugs 100 gleich wie oder kleiner als ein Geschwindigkeits-Schwellenwert ist (z.B. von 40km/h). So kann die Referenz-Trajektorie 203 bereitgestellt werden, auch wenn der Nutzer zunächst nicht vorhatte, den Rückfahrassistenten zu nutzen.

Die Speichereinheit 104 kann z.B. als Ringspeicher realisiert sein, auf dem Referenzdaten in Bezug auf eine Referenz-Trajektorie 203 der letzten x Meter einer Vorwärtsfahrt gespeichert werden können (wobei x= 30, 40, 50 oder mehr). Wenn die Vorwärtsfahrt länger als die Nenndistanz von x Metern ist, so können die Referenzdaten in Bezug auf den jeweils am weitesten zurückliegenden Abschnitt der Referenz-Trajektorie 203 mit Referenzdaten in Bezug auf den aktuellen Abschnitt der Referenz-Trajektorie 203 überschrieben werden.

Die Referenzdaten bezüglich einer Referenz-Trajektorie 203 kann Positionsinformation 201 in Bezug auf einen Referenzpunkt 101 des Fahrzeugs 100 umfassen, wobei der Referenzpunkt 101 z.B. dem Mittelpunkt der Hinterachse 120 entsprechen kann. Die Referenzdaten in Bezug auf die Position des Referenzpunkts 101 können mit einer bestimmten Abtastrate (z.B. alle 10cm, 5cm, oder weniger) ermittelt werden, so dass anhand der Positionsinformation 201 bzgl. der Position des Referenzpunktes 101 der Verlauf der Referenz-Trajektorie 203 bei der Vorwärtsfahrt des Fahrzeugs 100 in präziser Weise beschrieben werden kann.

Ein Fahrzeug 100 weist an einer bestimmten Position auf einer Vorwärtsfahrt eine bestimmte Orientierung 102 auf. An einer Position kann daher Orientierungsinformation 202 in Bezug auf eine Verdrehung bzw. Ausrichtung bzw. Orientierung 102 des Fahrzeugs 100 relativ zu dem Referenzpunkt 101 ermittelt werden. Anhand der Orientierungsinformation 202 an der Vielzahl von Positionen der Referenz-Trajektorie 203 kann ein Abdeckungsbereich 204, insbesondere ein Schlauch, um die Referenz-Trajektorie 203 ermittelt werden (siehe Fig. 2), der den Bereich anzeigt, an dem sich während der Vorwärtsfahrt eine Komponente (z.B. ein Teil der Karosserie) des Fahrzeugs 100 befunden hat. Der Abdeckungsbereich 204 zeigt somit, bei Annahme von statischen Hindernissen auf der Referenz-Trajektorie 203, den Bereich an, in dem das Fahrzeug 100 kollisionsfrei entlang einer Rückfahr-Trajektorie 213 geführt werden kann. Mit anderen Worten, die Rückfahr-Trajektorie 213 kann derart auf Basis der Referenz-Trajektorie 203 ermittelt werden, dass das Fahrzeug 100 bei der Rückwärtsfahrt entlang der Rückfahr-Trajektorie 213 innerhalb des Abdeckungsbereichs 204 bleibt. So kann, bei Annahme von statischen Hindernissen, eine kollisionsfreie Rückfahrt ermöglicht werden.

Die Referenzdaten bezüglich der bei der Vorwärtsfahrt ermittelten Referenz-Trajektorie 203 können somit für eine Vielzahl von Positionen auf der Referenz-Trajektorie 203 jeweils Positionsinformation 201 umfassen, die die Position des Referenzpunktes 101 des Fahrzeugs 100 anzeigt (z.B. in einem kartesischen Koordinatensystem relativ zu der Anfangsposition der Referenz-Trajektorie 203). Des Weiteren können die Referenzdaten für die Vielzahl von Positionen jeweils Orientierungsinformation 201 in Bezug auf eine Orientierung 102 des Fahrzeugs 100 an der jeweiligen Position anzeigen. So können die Referenz-Trajektorie 203 und der Abdeckungsbereich 204 des Fahrzeugs 100 auf einer Vorwärtsfahrt in präziser Weise beschrieben werden.

Alternativ oder ergänzend können die Referenzdaten für Trajektorien-Segmente zwischen einer Vielzahl von Positionen Krümmungsinformation in Bezug auf eine Krümmung des jeweiligen Trajektorien-Segments umfassen. Die Referenz-Trajektorie 203 kann dann durch eine Sequenz von Krümmungswerten beschrieben werden. Des Weiteren kann durch Interpolation der Sequenz von Krümmungswerten ein Verlauf der Referenz-Trajektorie 203 ermittelt werden (z.B. durch die Verwendung von Klothoiden). Aus den Krümmungswerten kann auch der Abdeckungsbereich 204 des Fahrzeugs bei der Vorwärtsfahrt auf der Referenz-Trajektorie 203 ermittelt werden.

Die Referenzdaten können somit auf unterschiedliche Weise eine Referenz-Trajektorie 203 und einen Abdeckungsbereich 204 eines Fahrzeugs 100 bei einer Vorwärtsfahrt beschreiben. Wenn detektiert wird, dass der Fahrer des Fahrzeugs 100 einen Rückwärtsgang einlegt und/oder wenn der Nutzer des Fahrzeugs 100 über eine Benutzerschnittstelle das Rückfahrassistenzsystem aktiviert, kann auf Basis der Referenzdaten eine Rückfahr-Trajektorie 213 für eine unterstützte Rückfahrt des Fahrzeugs 100 zu dem Anfangspunkt der Referenz-Trajektorie 203 ermittelt werden. Dabei kann die Referenz-Trajektorie 203 derart ermittelt werden, dass das Fahrzeug 100
- den Anfangspunkt der Referenz-Trajektorie 203 erreicht; und/oder
- möglichst weitgehend innerhalb des Abdeckungsbereichs 204 bleibt.

Die ermittelte Rückfahr-Trajektorie 213 kann insbesondere einen Lenkwinkel der Lenkvorrichtung der Vorderachse 110 des Fahrzeugs 100 als Funktion der Position auf der Rückfahr-Trajektorie 213 anzeigen. Der Fahrer des Fahrzeugs 100 kann dann auf Basis der ermittelten Rückfahr-Trajektorie 213 bei der Rückwärtsfahrt unterstützt werden. Insbesondere kann die Lenkvorrichtung des Fahrzeugs 100 automatisch in Abhängigkeit von der Rückfahr-Trajektorie 213 angesteuert werden, um die Querführung des Fahrzeugs 100 zu übernehmen. Andererseits kann die Längsführung des Fahrzeugs 100, insbesondere die Festlegung der Längsgeschwindigkeit und der Fahrrichtung (vorwärts bzw. rückwärts) des Fahrzeugs 100, weiter durch den Fahrer durchgeführt werden. Die Bereitstellung eines derartigen Rückfahrassistenten ermöglicht es einem Fahrer eines Fahrzeugs 100, in komfortabler Weise rückwärts aus einer beengten Verkehrssituation (z.B. auf einem engen Parkhaus) herauszufahren.

Im Rahmen einer Vorwärtsfahrt kann es dazu kommen, dass ein Fahrzeug 100 in mehreren Teilzügen zu einer Endposition geführt wird. Dabei können die Teilzüge zumindest teilweise eine Vorwärtsfahrt des Fahrzeugs 100 umfassen. Fig. 3 zeigt eine beispielhafte Fahrt eines Fahrzeugs 100, bei dem das Fahrzeug 100 ausgehend von einer Anfangsposition 311 in Vorwärtsrichtung manuell durch einen Fahrer des Fahrzeugs 100 entlang einer ersten Trajektorie 301 zu einer ersten Endposition 312 geführt wird. Das Fahrzeug kann dann entlang einer zweiten Trajektorie 302 in Rückwärtsrichtung bis an eine Zwischenposition 313 auf der ersten Trajektorie 301 zurückgeführt werden, z.B. weil ein Fahrer an der ersten Endposition 312 keine Parklücke gefunden hat. Das Führen in Rückwärtsrichtung kann dabei manuell durch den Fahrer des Fahrzeugs 100 oder unterstützt durch ein Rückfahrassistenzsystem erfolgen. Ausgehend von der Zwischenposition 313 kann dann das Fahrzeug 100 entlang einer dritten Trajektorie 303 in Vorwärtsrichtung manuell durch den Fahrer des Fahrzeugs 100 zu einer zweiten Endposition 314 geführt werden.

Die Steuereinheit 103 des Fahrzeugs 100 kann derart ausgelegt sein, dass ab der Anfangsposition 311 Referenzdaten bzgl. einer Referenz-Trajektorie 203 für die Vorwärtsfahrt entlang der ersten Trajektorie 301 bis zu der ersten Endposition 312 ermittelt und in der Speichereinheit 104 gespeichert werden. Die Steuereinheit 103 kann dann eine Rückfahr-Trajektorie 213 für die Referenz-Trajektorie 203 ermitteln, mit der das Fahrzeug 100 wieder zu der Anfangsposition 311 geführt werden kann.

Bei Erreichen der Zwischenposition 313 kann der Fahrer das Fahrzeug 100 stoppen und wieder einen Vorwärtsgang einlegen. Durch Einlegen des Vorwärtsganges könnte bewirkt werden, dass die Referenzdaten bzgl. der Referenz-Trajektorie 203 ab der Anfangsposition 311 gelöscht werden, und neue Referenzdaten bzgl. der dritten Trajektorie 303 ausgehend von der Zwischenposition 313 erfasst und gespeichert werden. Dies hat jedoch den Nachteil, dass dann nur eine Rückfahr-Trajektorie 213 ausgehend von der zweiten Endposition 214 bis zu der Zwischenposition 313 ermittelt werden kann. Eine Unterstützung des Fahrers bei der Fahrt auf einer vierten Trajektorie 304, die das Fahrzeug 100 ausgehend von der zweiten Endposition 214 bis zu der Anfangsposition 311 führt, ist dann nicht mehr möglich.

Die Steuereinheit 103 des Fahrzeugs 100 kann daher bevorzugt eingerichtet sein, zu erkennen, dass die Zwischenposition 313, an der der Fahrer des Fahrzeugs 100 von einem Rückwärtsgang auf einen Vorwärtsgang übergeht, auf einer bereits gespeicherten Referenz-Trajektorie 203 liegt. Des Weiteren können die Referenzdaten bzgl. der Referenz-Trajektorie 203 zwischen der Zwischenposition 313 und der ersten Endposition 312 gelöscht werden. Die Referenzdaten bzgl. des ersten Abschnitts der Referenz-Trajektorie 203 zwischen der Anfangsposition 311 und der Zwischenposition 313 können weiter gespeichert bleiben.

Außerdem können bei der zweiten Vorwärtsfahrt ausgehend von der Zwischenposition 313 entlang der dritten Trajektorie 303 Referenzdaten in Bezug auf einen zweiten Abschnitt der Referenz-Trajektorie 203 zwischen der Zwischenposition 313 und der zweiten Endposition 314 erfasst und gespeichert werden. In der Speichereinheit 104 können somit Referenzdaten in Bezug auf den ersten Abschnitt und in Bezug auf den direkt anschließenden zweiten Abschnitt einer Referenz-Trajektorie 203 gespeichert werden. Die gespeicherten Referenzdaten können dann dazu verwendet werden, das Fahrzeug 100 bei einer Rückwärtsfahrt von der zweiten Endposition 314 bis zu der Anfangsposition 311 zu unterstützen. Insbesondere kann auf Basis der gespeicherten Referenzdaten eine Rückfahr-Trajektorie 213 von der zweiten Endposition 314 bis zu der Anfangsposition 311 ermittelt werden und im Rahmen eines Rückfahrassistenzsystems verwendet werden.

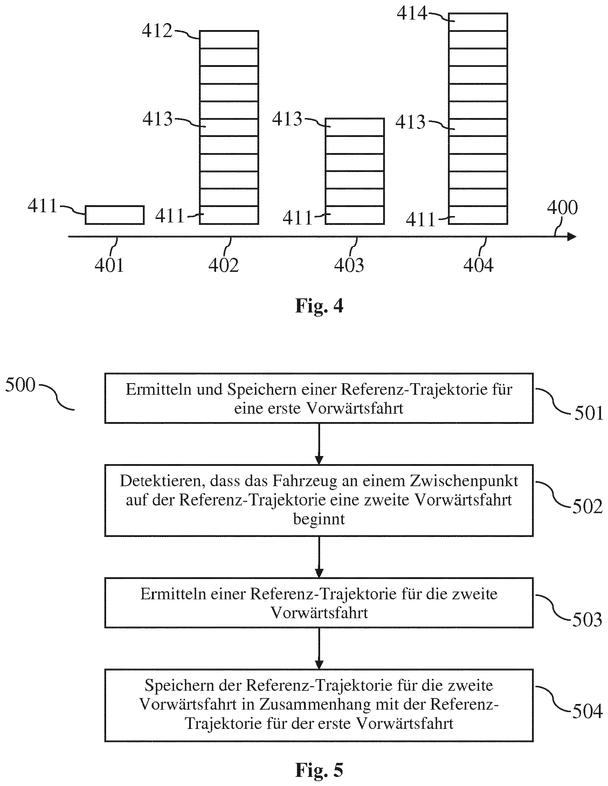

Fig. 4 veranschaulicht Datensätze, die bei der Durchführung des in Fig. 3 gezeigten Fahrmanövers in der Speichereinheit 104 gespeichert werden können. Bei Aktivierung 401 der Rückfahrassistenzfunktion an der Anfangsposition 311 kann ein Anfangs-Datensatz 411 ermittelt werden, der die Referenz-Trajektorie 203 und/oder den Abdeckungsbereich 214 an der Anfangsposition 311 anzeigt. Im Laufe der Vorwärtsfahrt 402 können dann weitere Datensätze 413, 412 für unterschiedlichen Positionen und/oder für unterschiedliche Segmente der Referenz-Trajektorie 203 erfasst und gespeichert werden. Insbesondere können ein Zwischen-Datensatz 413 für die Zwischenposition 313 und ein End-Datensatz 412 für die erste Endposition 312 ermittelt und gespeichert werden.

Das Fahrzeug 100 kann dann in Rückwärtsrichtung von dem Fahrer und/oder durch das Rückfahrassistenzsystem zu der Zwischenposition 313 geführt werden. Mit Einlegen 403 des Vorwärtsgangs können die Datensätze 412 für die Referenz-Trajektorie 203 zwischen Zwischenposition 313 und erster Endposition 312 gelöscht werden. Andererseits können die Datensätze 411, 413 für die Referenz-Trajektorie 203 zwischen Anfangsposition 311 und Zwischenposition 313 in der Speichereinheit 104 gespeichert bleiben. Bei der Vorwärtsfahrt 404 zu der zweiten Endposition 314 können dann Datensätze 414 an die bereits gespeicherten Datensätze 411, 413 angehängt werden, um den zweiten Abschnitt der Referenz-Trajektorie 203 zu beschreiben.

Es wird somit eine Trajektorienerweiterung einer bereits gespeicherten Referenz-Trajektorie 203, d.h. einer bereits aufgezeichneten Strecke, ermöglicht. Wie in Fig. 3 dargelegt, kann das Fahrzeug 100 den Anfangspunkt 311 markieren und als Referenzdaten speichern. Das Fahrzeug 100 kann dann einen ersten Zug (entlang einer ersten Trajektorie 301) in Vorwärtsfahrt machen und es können Referenzdaten bezüglich des ersten Zugs gespeichert werden. Der 2.Zug (entlang der zweiten Trajektorie 302) erfolgt in Rückwärtsfahrt (ggf. quergeführt durch das Fahrzeug 100) und es kann somit nur noch die Differenz-Trajektorie aus der Trajektorie des ersten Zugs minus der Trajektorie des zweiten Zugs abgefahren werden.

Nun fährt das Fahrzeug 100 einen dritten Zug (entlang der dritten Trajektorie 303) in Vorwärtsfahrt und speichert diese als Referenz-Trajektorie 203. Mit der Zusammenführung der Trajektorien des dritten Zugs und des ersten Teils des ersten Zugs ergibt sich eine Referenz-Trajektorie 203 zwischen Anfangspunkt 311 und Endpunkt 314, die im Rahmen eines vierten Zugs entlang der Rückfahr-Trajektorie 304 abgefahren werden kann, obwohl der Fahrer des Fahrzeugs 100 diese Trajektorie nicht an einem Stück vorwärts abgefahren ist.

Fig. 5 zeigt ein Ablaufdiagramm eines beispielhaften Verfahrens 500 zur Ermittlung einer Referenz-Trajektorie 203 für ein Rückfahrassistenzsystem eines Fahrzeugs 100. Die Referenz-Trajektorie 203 kann insbesondere von dem Rückfahrassistenzsystem dazu genutzt werden, das Fahrzeug 100 bei einer Rückwärtsfahrt zumindest teilweise autonom zu führen. Das Verfahren 500 umfasst das Ermitteln und Speichern 501 von Referenzdaten in Bezug auf eine erste Vorwärtsfahrt des Fahrzeugs 100. Dabei zeigen die Referenzdaten die Referenz-Trajektorie 203 des Fahrzeugs 100 für die erste Vorwärtsfahrt von einer Anfangsposition 311 der ersten Vorwärtsfahrt bis zu einer ersten Endposition 312 der ersten Vorwärtsfahrt an. Typischerweise ist die Distanz einer Vorwärtsfahrt, die gespeichert werden kann, auf eine Nenndistanz beschränkt. Folglich entspricht die Anfangsposition 311 nicht unbedingt der Position, an der die erste Vorwärtsfahrt begonnen hat. Bei der Anfangsposition 311 kann es sich allgemein um eine Position handeln, die auf der Referenz-Trajektorie 203 der ersten Vorwärtsfahrt vor der ersten Endposition 312 liegt.

Das Verfahren 500 umfasst weiter das Detektieren 502, dass das Fahrzeug 100 an einer Zwischenposition 313, die zwischen der Anfangsposition 311 und der ersten Endposition 312 auf der Referenz-Trajektorie 203 liegt, eine neue, zweite Vorwärtsfahrt beginnt. Insbesondere kann das Fahrzeug 100 rückwärts zu der Zwischenposition 313 geführt worden sein. An der Zwischenposition 313 kann dann der Fahrer des Fahrzeugs 100 wieder einen Vorwärtsgang eingelegt haben, um die zweite Vorwärtsfahrt zu beginnen.

Außerdem umfasst das Verfahren 500 das Ermitteln 503 von Referenzdaten in Bezug auf die zweite Vorwärtsfahrt des Fahrzeugs 100. Dabei zeigen die Referenzdaten die Referenz-Trajektorie 203 des Fahrzeugs 100 für die zweite Vorwärtsfahrt ausgehend von der Zwischenposition 313 an. Das Fahrzeug 100 kann während der zweiten Vorwärtsfahrt bis zu einer zweiten Endposition 314 geführt werden.

Das Verfahren 500 umfasst weiter das Speichern 504 der Referenzdaten bezüglich der Referenz-Trajektorie 203 für die zweite Vorwärtsfahrt ausgehend von der Zwischenposition 313 in Zusammenhang bzw. in Verbindung mit den Referenzdaten bezüglich der Referenz-Trajektorie 203 für die erste Vorwärtsfahrt von der Anfangsposition 311 bis zu der Zwischenposition 313. Insbesondere können die Referenzdaten für die zweite Vorwärtsfahrt ab der Zwischenposition 313 an die Referenzdaten für die erste Vorwärtsfahrt bis zu der Zwischenposition 313 angehängt werden, um eine durchgängige Referenz-Trajektorie 203 von der Anfangsposition 311 über die Zwischenposition 313 bis zu der zweiten Endposition 314 bereitzustellen. Diese Referenz-Trajektorie 203 kann dann von dem Rückfahrassistenzsystem dazu genutzt werden, das Fahrzeug 100 zumindest teilweise rückwärts an die Anfangsposition 311 zurückzuführen.

Durch die Aneinanderreihung von Referenz-Trajektorien 203 kann der Anwendungsbereich für ein Rückfahrassistenzsystem erhöht werden. So kann der Komfort eines Nutzers eines Fahrzeugs 100 erhöht werden.

Die vorliegende Erfindung ist nicht auf die gezeigten Ausführungsbeispiele beschränkt. Insbesondere ist zu beachten, dass die Beschreibung und die Figuren nur das Prinzip der vorgeschlagenen Verfahren, Vorrichtungen und Systeme veranschaulichen sollen.

## Patentansprüche

1. Steuereinheit (103) für ein Rückfahrassistenzsystem eines Fahrzeugs (100); wobei die Steuereinheit (103) eingerichtet ist,
- Referenzdaten in Bezug auf eine erste Vorwärtsfahrt des Fahrzeugs (100) zu ermitteln und zu speichern, die manuell durch einen Fahrer des Fahrzeugs (100) bewirkt wird; wobei die Referenzdaten eine Referenz-Trajektorie (203) des Fahrzeugs (100) für die erste Vorwärtsfahrt von einer Anfangsposition (311) bis zu einer ersten Endposition (312) anzeigen;
- zu detektieren, dass das Fahrzeug (100) an einer Zwischenposition (313), die zwischen der Anfangsposition (311) und der ersten Endposition (312) auf der Referenz-Trajektorie (203) liegt, eine neue, zweite Vorwärtsfahrt beginnt;
- Referenzdaten in Bezug auf die zweite Vorwärtsfahrt des Fahrzeugs (100) zu ermitteln, die manuell durch den Fahrer des Fahrzeugs (100) bewirkt wird; wobei die Referenzdaten die Referenz-Trajektorie (203) des Fahrzeugs (100) für die zweite Vorwärtsfahrt ausgehend von der Zwischenposition (313) anzeigen; und
- die Referenzdaten bezüglich der Referenz-Trajektorie (203) für die zweite Vorwärtsfahrt ausgehend von der Zwischenposition (313) in Verbindung mit den Referenzdaten bezüglich der Referenz-Trajektorie (203) für die erste Vorwärtsfahrt von der Anfangsposition (311) bis zu der Zwischenposition (313) zu setzen, um eine zusammenhängende Referenz-Trajektorie (203) für eine assistierte Rückwärtsfahrt bereitzustellen.

2. Steuereinheit (103) gemäß Anspruch 1, wobei die Steuereinheit (103) eingerichtet ist,
- die Referenzdaten in einer Speichereinheit (104) zu speichern; und
- die Referenzdaten bezüglich der Referenz-Trajektorie (203) für die erste Vorwärtsfahrt von der Zwischenposition (313) bis zu der ersten Endposition (312) mit den Referenzdaten bezüglich der Referenz-Trajektorie (203) für die zweite Vorwärtsfahrt ausgehend von der Zwischenposition (313) zu überschreiben.

3. Steuereinheit (103) gemäß einem vorhergehenden Anspruch, wobei die Steuereinheit (103) eingerichtet ist,
- Referenzdaten für eine Nenndistanz einer Referenz-Trajektorie (203) zu speichern; und
- Referenzdaten bezüglich der Anfangsposition (311) mit Referenzdaten bezüglich einer aktuellen Position des Fahrzeugs (100) zu überschreiben, wenn eine Distanz der gespeicherten Referenz-Trajektorie (203) die Nenndistanz erreicht.

4. Steuereinheit (103) gemäß einem der vorhergehenden Ansprüche, wobei die Steuereinheit (103) eingerichtet ist, zu ermitteln, dass das Fahrzeug (100) bei einer Rückwärtsfahrt von der ersten Endposition (312) an die Zwischenposition (313) überführt wurde.

5. Steuereinheit (103) gemäß einem der vorhergehenden Ansprüche, wobei die Steuereinheit (103) eingerichtet ist,
- einen Abstand eines Referenzpunktes (101) des Fahrzeugs (100) von der Zwischenposition (313) zu ermitteln; und
- in Abhängigkeit von dem Abstand zu ermitteln, ob sich das Fahrzeug (100) zu Beginn der zweiten Vorwärtsfahrt an der Zwischenposition (313) befindet.

6. Steuereinheit (103) gemäß einem der vorhergehenden Ansprüche, wobei die Steuereinheit (103) eingerichtet ist, eine Lenkvorrichtung des Fahrzeugs (100) bei einer Rückwärtsfahrt des Fahrzeugs (100) in Abhängigkeit von den Referenzdaten zu steuern, um das Fahrzeug (100) nach Beendigung der zweiten Vorwärtsfahrt bis zu einer Rückfahrposition auf der Referenz-Trajektorie (203) zwischen der Anfangsposition (311) und der Zwischenposition (313) zu führen.

7. Steuereinheit (103) gemäß Anspruch 6, wobei die Steuereinheit (103) eingerichtet ist,
- auf Basis der Referenzdaten eine Rückfahr-Trajektorie (213) zu der Rückfahrposition zu ermitteln; und
- die Lenkvorrichtung des Fahrzeugs (100) bei der Rückwärtsfahrt des Fahrzeugs (100) in Abhängigkeit von der Rückfahr-Trajektorie (213) zu steuern.

8. Steuereinheit (103) gemäß Anspruch 7, wobei die Steuereinheit (103) eingerichtet ist,
- auf Basis der Referenzdaten, einen Abdeckungsbereich (204) des Fahrzeugs (100) bei der ersten und der zweiten Vorwärtsfahrt zu ermitteln; und
- die Rückfahr-Trajektorie (213) auch in Abhängigkeit von dem Abdeckungsbereich (204) des Fahrzeugs (100) zu ermitteln.

9. Steuereinheit (103) gemäß einem der vorhergehenden Ansprüche, wobei die Referenzdaten,
- Positionsinformation (201) in Bezug auf eine Vielzahl von Positionen auf der Referenz-Trajektorie (203) umfasst; und
- Orientierungsinformation (202) in Bezug auf eine Orientierung (102) des Fahrzeugs (100) an der Vielzahl von Positionen umfasst.

10. Verfahren (500) zur Ermittlung einer Referenz-Trajektorie (203) für ein Rückfahrassistenzsystem eines Fahrzeugs (100), wobei das Verfahren (500) umfasst,
- Ermitteln und Speichern (501) von Referenzdaten in Bezug auf eine erste Vorwärtsfahrt des Fahrzeugs (100), die manuell durch einen Fahrer des Fahrzeugs (100) bewirkt wird; wobei die Referenzdaten die Referenz-Trajektorie (203) des Fahrzeugs (100) für die erste Vorwärtsfahrt von einer Anfangsposition (311) zu einer ersten Endposition (312) anzeigen;
- Detektieren (502), dass das Fahrzeug (100) an einer Zwischenposition (313), die zwischen der Anfangsposition (311) und der ersten Endposition (312) auf der Referenz-Trajektorie (203) liegt, eine neue, zweite Vorwärtsfahrt beginnt;
- Ermitteln (503) von Referenzdaten in Bezug auf die zweite Vorwärtsfahrt des Fahrzeugs (100), die manuell durch den Fahrer des Fahrzeugs (100) bewirkt wird; wobei die Referenzdaten die Referenz-Trajektorie (203) des Fahrzeugs (100) für die zweite Vorwärtsfahrt ausgehend von der Zwischenposition (313) anzeigen; und
- Verbinden (504) der Referenzdaten bezüglich der Referenz-Trajektorie (203) für die zweite Vorwärtsfahrt ausgehend von der Zwischenposition (313) mit den Referenzdaten bezüglich der Referenz-Trajektorie (203) für die erste Vorwärtsfahrt von der Anfangsposition (311) bis zu der Zwischenposition (313), um eine zusammenhängende Referenz-Trajektorie (203) für eine assistierte Rückwärtsfahrt bereitzustellen.

11. Steuereinheit (103) für ein Fahrerassistenzsystem eines Fahrzeugs (100) mit automatisierter Querführung und/oder automatisierter Längsführung; wobei die Steuereinheit (103) eingerichtet ist,
- Referenzdaten in Bezug auf eine erste Referenzfahrt des Fahrzeugs (100) zu ermitteln und zu speichern, die manuell durch einen Fahrer des Fahrzeugs (100) bewirkt wird; wobei die Referenzdaten eine Referenz-Trajektorie (203) des Fahrzeugs (100) für die erste Referenzfahrt von einer Anfangsposition (311) bis zu einer ersten Endposition (312) anzeigen;
- zu detektieren, dass das Fahrzeug (100) an einer Zwischenposition (313), die zwischen der Anfangsposition (311) und der ersten Endposition (312) auf der Referenz-Trajektorie (203) liegt, eine neue, zweite Referenzfahrt beginnt;
- Referenzdaten in Bezug auf die zweite Referenzfahrt des Fahrzeugs (100) zu ermitteln, die manuell durch den Fahrer des Fahrzeugs (100) bewirkt wird; wobei die Referenzdaten die Referenz-Trajektorie (203) des Fahrzeugs (100) für die zweite Referenzfahrt ausgehend von der Zwischenposition (313) anzeigen; und
- die Referenzdaten bezüglich der Referenz-Trajektorie (203) für die zweite Referenzfahrt ausgehend von der Zwischenposition (313) in Verbindung mit den Referenzdaten bezüglich der Referenz-Trajektorie (203) für die erste Referenzfahrt von der Anfangsposition (311) bis zu der Zwischenposition (313) zu setzen, um eine zusammenhängende Referenz-Trajektorie (203) für eine assistierte erneute Fahrt bereitzustellen.

12. Verfahren zur Ermittlung einer Referenz-Trajektorie (203) für ein Fahrerassistenzsystem eines Fahrzeugs (100) mit automatisierter Querführung und/oder Längsführung, wobei das Verfahren umfasst,
- Ermitteln und Speichern von Referenzdaten in Bezug auf eine erste Referenzfahrt des Fahrzeugs (100), die manuell durch einen Fahrer des Fahrzeugs (100) bewirkt wird; wobei die Referenzdaten die Referenz-Trajektorie (203) des Fahrzeugs (100) für die erste Referenzfahrt von einer Anfangsposition (311) zu einer ersten Endposition (312) anzeigen;
- Detektieren, dass das Fahrzeug (100) an einer Zwischenposition (313), die zwischen der Anfangsposition (311) und der ersten Endposition (312) auf der Referenz-Trajektorie (203) liegt, eine neue, zweite Referenzfahrt beginnt;
- Ermitteln von Referenzdaten in Bezug auf die zweite Referenzfahrt des Fahrzeugs (100), die manuell durch den Fahrer des Fahrzeugs (100) bewirkt wird; wobei die Referenzdaten die Referenz-Trajektorie (203) des Fahrzeugs (100) für die zweite Referenzfahrt ausgehend von der Zwischenposition (313) anzeigen; und
- Verbinden der Referenzdaten bezüglich der Referenz-Trajektorie (203) für die zweite Referenzfahrt ausgehend von der Zwischenposition (313) mit den Referenzdaten bezüglich der Referenz-Trajektorie (203) für die erste Referenzfahrt von der Anfangsposition (311) bis zu der Zwischenposition (313), um eine zusammenhängende Referenz-Trajektorie (203) für eine assistierte erneute Fahrt bereitzustellen.

## Claims

1. Control unit (103) for a reversing assistance system of a vehicle (100); wherein the control unit (103) is configured
- to ascertain and to store reference data in regard to a first forward travel of the vehicle (100) which is effected manually by a driver of the vehicle (100); wherein the reference data indicate a reference trajectory (203) of the vehicle (100) for the first forward travel from an initial position (311) to a first end position (312) ;
- to detect that the vehicle (100) begins a new, second forward travel at an intermediate position (313) situated between the initial position (311) and the first end position (312) on the reference trajectory (203);
- to ascertain reference data in regard to the second forward travel of the vehicle (100) which is effected manually by the driver of the vehicle (100); wherein the reference data indicate the reference trajectory (203) of the vehicle (100) for the second forward travel starting from the intermediate position (313); and
- to link the reference data for the reference trajectory (203) for the second forward travel starting from the intermediate position (313) to the reference data for the reference trajectory (203) for the first forward travel from the initial position (311) to the intermediate position (313) in order to provide a coherent reference trajectory (203) for an assisted reverse travel.

2. Control unit (103) according to Claim 1, wherein the control unit (103) is configured
- to store the reference data in a memory unit (104); and
- to overwrite the reference data for the reference trajectory (203) for the first forward travel from the intermediate position (313) to the first end position (312) with the reference data for the reference trajectory (203) for the second forward travel starting from the intermediate position (313).

3. Control unit (103) according to a preceding claim, wherein the control unit (103) is configured
- to store reference data for a rated distance of a reference trajectory (203); and
- to overwrite reference data for the initial position (311) with reference data for a present position of the vehicle (100) if a distance of the stored reference trajectory (203) reaches the rated distance.

4. Control unit (103) according to one of the preceding claims, wherein the control unit (103) is configured to ascertain that the vehicle (100) has been conveyed from the first end position (312) to the intermediate position (313) during a reverse travel.

5. Control unit (103) according to one of the preceding claims, wherein the control unit (103) is configured
- to ascertain a distance of a reference point (101) of the vehicle (100) from the intermediate position (313); and
- to take the distance as a basis for ascertaining whether the vehicle (100) is at the intermediate position (313) at the beginning of the second forward travel.

6. Control unit (103) according to one of the preceding claims, wherein the control unit (103) is configured to control a steering apparatus of the vehicle (100) on the basis of the reference data during a reverse travel of the vehicle (100) in order to drive the vehicle (100) to a reversing position on the reference trajectory (203) between the initial position (311) and the intermediate position (313) after termination of the second forward travel.

7. Control unit (103) according to Claim 6, wherein the control unit (103) is configured
- to take the reference data as a basis for ascertaining a reversing trajectory (213) to the reversing position; and
- to control the steering apparatus of the vehicle (100) on the basis of the reversing trajectory (213) during the reverse travel of the vehicle (100) .

8. Control unit (103) according to Claim 7, wherein the control unit (103) is configured
- to take the reference data as a basis for ascertaining a coverage area (204) of the vehicle (100) during the first and second forward travels; and
- to ascertain the reversing trajectory (213) also on the basis of the coverage area (204) of the vehicle (100).

9. Control unit (103) according to one of the preceding claims, wherein the reference data
- comprise position information (201) in regard to a multiplicity of positions on the reference trajectory (203); and
- comprise orientation information (202) in regard to an orientation (102) of the vehicle (100) at the multiplicity of positions.

10. Method (500) for ascertaining a reference trajectory (203) for a reversing assistance system of a vehicle (100), wherein the method (500) comprises
- ascertaining and storing (501) reference data in regard to a first forward travel of the vehicle (100) which is effected manually by a driver of the vehicle (100); wherein the reference data indicate the reference trajectory (203) of the vehicle (100) for the first forward travel from an initial position (311) to a first end position (312) ;
- detecting (502) that the vehicle (100) begins a new, second forward travel at an intermediate position (313) situated between the initial position (311) and the first end position (312) on the reference trajectory (203);
- ascertaining (503) reference data in regard to the second forward travel of the vehicle (100) which is effected manually by the driver of the vehicle (100); wherein the reference data indicate the reference trajectory (203) of the vehicle (100) for the second forward travel starting from the intermediate position (313); and
- linking (504) the reference data for the reference trajectory (203) for the second forward travel starting from the intermediate position (313) to the reference data for the reference trajectory (203) for the first forward travel from the initial position (311) to the intermediate position (313) in order to provide a coherent reference trajectory (203) for an assisted reverse travel.

11. Control unit (103) for a driver assistance system of a vehicle (100) having automated transverse guidance and/or automated longitudinal guidance; wherein the control unit (103) is configured
- to ascertain and to store reference data in regard to a first reference travel of the vehicle (100) which is effected manually by a driver of the vehicle (100); wherein the reference data indicate a reference trajectory (203) of the vehicle (100) for the first reference travel from an initial position (311) to a first end position (312) ;
- to detect that the vehicle (100) begins a new, second reference travel at an intermediate position (313) situated between the initial position (311) and the first end position (312) on the reference trajectory (203);
- to ascertain reference data in regard to the second reference travel of the vehicle (100) which is effected manually by the driver of the vehicle (100); wherein the reference data indicate the reference trajectory (203) of the vehicle (100) for the second reference travel starting from the intermediate position (313); and
- to link the reference data for the reference trajectory (203) for the second reference travel starting from the intermediate position (313) to the reference data for the reference trajectory (203) for the first reference travel from the initial position (311) to the intermediate position (313) in order to provide a coherent reference trajectory (203) for an assisted renewed travel.

12. Method for ascertaining a reference trajectory (203) for a driver assistance system of a vehicle (100) having automated transverse guidance and/or longitudinal guidance, wherein the method comprises
- ascertaining and storing reference data in regard to a first reference travel of the vehicle (100) which is effected manually by a driver of the vehicle (100); wherein the reference data indicate the reference trajectory (203) of the vehicle (100) for the first reference travel from an initial position (311) to a first end position (312) ;
- detecting that the vehicle (100) begins a new, second reference travel at an intermediate position (313) situated between the initial position (311) and the first end position (312) on the reference trajectory (203);
- ascertaining reference data in regard to the second reference travel of the vehicle (100) which is effected manually by the driver of the vehicle (100); wherein the reference data indicate the reference trajectory (203) of the vehicle (100) for the second reference travel starting from the intermediate position (313); and
- linking the reference data for the reference trajectory (203) for the second reference travel starting from the intermediate position (313) to the reference data for the reference trajectory (203) for the first reference travel from the initial position (311) to the intermediate position (313) in order to provide a coherent reference trajectory (203) for an assisted renewed travel.

## Revendications

1. Unité de commande (103) pour un système d'assistance à la marche arrière d'un véhicule (100) ; l'unité de commande (103) étant aménagée pour
- déterminer et mémoriser des données de référence relatives à une première marche avant du véhicule (100) qui est provoquée manuellement par un conducteur du véhicule (100) ; les données de référence indiquant une trajectoire de référence (203) du véhicule (100) pour la première marche avant d'une position initiale (311) à une première position finale (312) ;
- détecter que le véhicule (100) commence une nouvelle, deuxième, marche avant à une position intermédiaire (313) qui est située entre la position initiale (311) et la première position finale (312) sur la trajectoire de référence (203) ;
- déterminer des données de référence relatives à la deuxième marche avant du véhicule (100) qui est provoquée manuellement par le conducteur du véhicule (100) ; les données de référence indiquant la trajectoire de référence (203) du véhicule (100) pour la deuxième marche avant en partant de la position intermédiaire (313) ; et
- définir les données de référence relatives à la trajectoire de référence (203) pour la deuxième marche avant en partant de la position intermédiaire (313) en relation avec les données de référence relatives à la trajectoire de référence (203) pour la première marche avant de la position initiale (311) à la position intermédiaire (313) afin de fournir une trajectoire de référence cohérente (203) pour une marche arrière assistée.

2. Unité de commande (103) selon la revendication 1, l'unité de commande (103) étant aménagée pour
- mémoriser les données de référence dans une unité de mémoire (104) ; et
- écraser les données de référence relatives à la trajectoire de référence (203) pour la première marche avant de la position intermédiaire (313) à la première position finale (312) par les données de référence relatives à la trajectoire de référence (203) pour la deuxième marche avant en partant de la position intermédiaire (313).

3. Unité de commande (103) selon une revendication précédente, l'unité de commande (103) étant aménagée pour
- mémoriser des données de référence pour une distance nominale d'une trajectoire de référence (203) ; et
- écraser des données de référence relatives à la position initiale (311) par des données de référence relatives à une position actuelle du véhicule (100) si une distance de la trajectoire de référence mémorisée (203) atteint la distance nominale.

4. Unité de commande (103) selon l'une quelconque des revendications précédentes, l'unité de commande (103) étant aménagée pour déterminer que le véhicule (100) a été transféré de la première position finale (312) à la position intermédiaire (313) lors d'une marche arrière.

5. Unité de commande (103) selon l'une quelconque des revendications précédentes, l'unité de commande (103) étant aménagée pour
- déterminer une distance d'un point de référence (101) du véhicule (100) par rapport à la position intermédiaire (313) ; et
- déterminer en fonction de la distance si le véhicule (100) se trouve dans la position intermédiaire (313) au début de la deuxième marche avant.

6. Unité de commande (103) selon l'une quelconque des revendications précédentes, l'unité de commande (103) étant aménagée pour commander un dispositif de direction du véhicule (100) lors d'une marche arrière du véhicule (100) en fonction des données de référence pour amener le véhicule (100) à l'issue de la deuxième marche avant à une position de marche arrière sur la trajectoire de référence (203) entre la position initiale (311) et la position intermédiaire (313).

7. Unité de commande (103) selon la revendication 6, l'unité de commande (103) étant aménagée pour
- déterminer sur la base des données de référence une trajectoire de marche arrière (213) jusqu'à la position de marche arrière ; et
- commander le dispositif de direction du véhicule (100) lors de la marche arrière du véhicule (100) en fonction de la trajectoire de marche arrière (213).

8. Unité de commande (103) selon la revendication 7, l'unité de commande (103) étant aménagée pour
- déterminer sur la base des données de référence une zone de couverture (204) du véhicule (100) lors de la première et de la deuxième marche avant ; et
- déterminer la trajectoire de marche arrière (213) aussi en fonction de la zone de couverture (204) du véhicule (100).

9. Unité de commande (103) selon l'une quelconque des revendications précédentes, dans laquelle les données de référence comprennent
- des informations de position (201) relatives à une pluralité de positions sur la trajectoire de référence (203) ; et
- des informations d'orientation (202) relatives à une orientation (102) du véhicule (100) dans la pluralité de positions.

10. Procédé (500) de détermination d'une trajectoire de référence (203) pour un système d'assistance à la marche arrière d'un véhicule (100), le procédé (500) comprenant les étapes consistant à
- déterminer et mémoriser (501) des données de référence relatives à une première marche avant du véhicule (100) qui est provoquée manuellement par un conducteur du véhicule (100) ; les données de référence indiquant la trajectoire de référence (203) du véhicule (100) pour la première marche avant d'une position initiale (311) à une première position finale (312) ;
- détecter (502) que le véhicule (100) commence une nouvelle, deuxième, marche avant à une position intermédiaire (313) qui est située entre la position initiale (311) et la première position finale (312) sur la trajectoire de référence (203) ;
- déterminer (503) des données de référence relatives à la deuxième marche avant du véhicule (100) qui est provoquée manuellement par le conducteur du véhicule (100) ; les données de référence indiquant la trajectoire de référence (203) du véhicule (100) pour la deuxième marche avant en partant de la position intermédiaire (313) ; et
- relier (504) les données de référence relatives à la trajectoire de référence (203) pour la deuxième marche avant en partant de la position intermédiaire (313) aux données de référence relatives à la trajectoire de référence (203) pour la première marche avant de la position initiale (311) à la position intermédiaire (313) afin de fournir une trajectoire de référence (203) cohérente pour une marche arrière assistée.

11. Unité de commande (103) pour un système d'assistance au conducteur d'un véhicule (100) doté d'un guidage transversal automatisé et/ou d'un guidage longitudinal automatisé ; l'unité de commande (103) étant aménagée pour
- déterminer et mémoriser des données de référence relatives à un premier déplacement de référence du véhicule (100) qui est provoqué manuellement par un conducteur du véhicule (100) ; les données de référence indiquant une trajectoire de référence (203) du véhicule (100) pour le premier déplacement de référence d'une position initiale (311) à une première position finale (312) ;
- détecter que le véhicule (100) commence un nouveau, deuxième, déplacement de référence à une position intermédiaire (313) qui est située entre la position initiale (311) et la première position finale (312) sur la trajectoire de référence (203) ;
- déterminer des données de référence relatives au deuxième déplacement de référence du véhicule (100) qui est provoqué manuellement par le conducteur du véhicule (100) ; les données de référence indiquant la trajectoire de référence (203) du véhicule (100) pour le deuxième déplacement de référence en partant de la position intermédiaire (313) ; et
- définir les données de référence relatives à la trajectoire de référence (203) pour le deuxième déplacement de référence en partant de la position intermédiaire (313) en relation avec les données de référence relatives à la trajectoire de référence (203) pour le premier déplacement de référence de la position initiale (311) à la position intermédiaire (313) afin de fournir une trajectoire de référence (203) cohérente pour un nouveau déplacement assisté.

12. Procédé de détermination d'une trajectoire de référence (203) pour un système d'assistance au conducteur d'un véhicule (100) doté d'un guidage transversal et/ou d'un guidage longitudinal automatisé(s), le procédé comprenant les étapes consistant à
- déterminer et mémoriser des données de référence relatives à un premier déplacement de référence du véhicule (100) qui est provoqué manuellement par un conducteur du véhicule (100) ; les données de référence indiquant la trajectoire de référence (203) du véhicule (100) pour le premier déplacement de référence d'une position initiale (311) à une première position finale (312) ;
- détecter que le véhicule (100) commence un nouveau, deuxième, déplacement de référence à une position intermédiaire (313) qui est située entre la position initiale (311) et la première position finale (312) sur la trajectoire de référence (203) ;
- déterminer des données de référence relatives au deuxième déplacement de référence du véhicule (100) qui est provoqué manuellement par le conducteur du véhicule (100) ; les données de référence indiquant la trajectoire de référence (203) du véhicule (100) pour le deuxième déplacement de référence en partant de la position intermédiaire (313) ; et
- relier les données de référence relatives à la trajectoire de référence (203) pour le deuxième déplacement de référence en partant de la position intermédiaire (313) aux données de référence relatives à la trajectoire de référence (203) pour le premier déplacement de référence de la position initiale (311) à la position intermédiaire (313) afin de fournir une trajectoire de référence (203) cohérente pour un nouveau déplacement assisté.
